# FASCICULE DE BREVET EUROPEEN

(11) **EP 0 971 783 B1**
(45) Date de publication et mention de la délivrance du brevet: **30.01.2008**
(21) Numéro de dépôt: 98947628.8
(22) Date de dépôt: 08.10.1998
(51) Int. Cl.: B01D 46/24, B01D 45/02, B01D 39/20, B01D 39/16

(54) **PROCEDE ET APPAREIL POUR LA SEPARATION DES GOUTELETTES OU PARTICULES D'UN COURANT GAZEUX**
VERFAHREN UND EINRICHTUNG ZUR ENTFERNUNG VON TRÖPFCHEN ODER TEILCHEN AUS EINEM GASSTROM
METHOD AND APPARATUS FOR SEPARATING DROPLETS OR PARTICLES FROM A GAS STREAM

(30) Priorité: 13.10.1997 FR 9712867
(43) Date de publication de la demande: 19.01.2000
(73) Titulaire: Institut Français du Pétrole, 92852 Rueil-Malmaison Cedex (FR); DULLIEN INC., Drumbo, Ontario N0J 1G0 (CA)
(72) Inventeur: DULLIEN, Francis, A., L., Drumbo, Ontario N0J 1G0 (CA)
(86) Numéro de dépôt international: PCT/FR1998/002151
(87) Numéro de publication internationale: WO 1999/019044

(56) Documents cités:
- EP-A- 0 501 138
- EP-A- 0 612 551
- WO-A-97/27385
- FR-A- 2 390 193
- PATENT ABSTRACTS OF JAPAN vol. 097, no. 008, 29 août 1997 & JP 09 096209 A (TENETSUKUSU:KK), 8 avril 1997

## Description

La présente invention concerne le domaine des séparateurs et plus spécifiquement des moyens destinés à séparer des gouttelettes ou des particules d'un courant gazeux. dont la taille est inférieure ou de l'ordre d'un micromètre.

De nombreuses méthodes et dispositifs ont déjà été divulgués à cet effet.

Le brevet US 5 626 651 décrit un procédé et un système de ce type selon lequel le courant gazeux turbulent s'écoule au-dessus d'une série de plaques définissant des zones non turbulentes dans lesquelles les particules sont capturées. Plus précisément les plaques sont parallèles entre elles et verticales. Un moyen de filtration constitué de fibres peut en outre être prévu entre lesdites plaques afin d'améliorer la filtration notamment des particules les plus fines.

La demande de brevet internationale WO 95/28217 décrit un dispositif qui repose sur le même fondement mais selon lequel les plaques sont munies de fentes ou bien sont remplacées par des grilles. Des carcasses grillagées enserrant un matelas fibreux sont en outre utilisées dans cet art antérieur.

Par ailleurs la demande de brevet WO 97/00102 concerne un séparateur placé à l'échappement de moteurs diesel afin de recueillir les particules contenues dans les gaz d'échappement. Une structure en nid d'abeille percée de canaux perpendiculaires à l'ouverture des cellules en nid d'abeille est préférentiellement prévue. La porosité d'une telle structure est de l'ordre de 70 %. Cependant ce dispositif ne peut être utilisé pour des brouillards car les gouttelettes capturées dans les cellules ne peuvent être éliminées par drainage.

On connaît aussi la demande de brevet internationale PCT/FR97/00164 concernant un séparateur ayant un ou plusieurs canaux d'écoulement verticaux latéralement délimités par des éléments plissés fibreux. Un agglomérateur est en outre nécessairement placé en amont du séparateur afin d'avoir des particules de plus grosses taille susceptibles d'être séparées au niveau du séparateur. Ceci est donc relativement coûteux et implique des pertes de pression non négligeables.

Ces moyens connus ne permettent cependant pas de capturer et d'éliminer efficacement des particules et/ou gouttelettes de taille inférieure à environ un micromètre : dans le brevet US 5 626 651, les particules captées s'accumulent sur les parois puis tombent par gravité au fond du dispositif. Des moyens destinés à secouer les parois sont souvent nécessaires pour faire tomber les particules accumulées sur les parois. Ce dispositif pose problème lorsqu'il s'agit de séparer des particules très fines, de taille inférieure au micromètre. Dans ce cas en effet, la hauteur du canal d'écoulement doit être très petite donc la hauteur des plaques très grande de sorte que l'équipement est très encombrant pour une section d'écoulement très faible. Le même problème existe dans le dispositif selon le document WO 95/28217.

Dans la demande de brevet WO 97/00102, les particules capturées sont oxydées.

La présente invention prévoit de résoudre le problème de l'élimination des particules et/ou des gouttelettes d'une façon originale et inattendue, telle qu'expliquée ci-après.

De façon avantageuse, la présente invention évite toute perte de charge due à un encrassement d'une zone du dispositif ; la chute de pression reste constante tout au long de la vie du séparateur selon l'invention.

Par ailleurs, la présente invention permet d'obtenir un très fort taux de séparation grâce à un équipement de petite taille, ayant une faible perte de pression et un fonctionnement continu.

Ainsi la présente invention vise un séparateur de type spongieux destiné à traiter des effluents gazeux contenant des particules liquides ou solides de taille sensiblement inférieure à un micromètre, voire de l'ordre du micromètre.

Selon l'invention, le séparateur est formé d'une mousse réticulée délimitant des canaux destinés à l'écoulement en état turbulent des effluents gazeux, lesdits canaux étant agencés de telle manière et étant tels que les effluents gazeux traversent ladite mousse d'une extrémité à l'autre des canaux, et la mousse comprend des fils adjacents formant des pores ou cellules interconnectées qui communiquent librement avec lesdits canaux afin de créer des zones stagnantes non turbulentes qui s'étendent à partir desdits canaux de manière à ce que les particules de manière à ce que les particules soient capturées et déposées sur les fils formant lesdits pores ou cellules.

De façon spécifique, la porosité de ladite mousse est comprise entre 90 % et 98 %, de préférence autour de 97 %.

En outre, la taille des cellules formant ladite mousse est comprise entre environ 0,5 mm et environ 5 mm.

De façon particulière, le diamètre des fils formant ladite mousse est compris entre 50 µm et 1000 µm.

Conformément à l'invention, le diamètre des canaux transperçant ladite mousse est compris entre 3 et 100 mm.

Les canaux peuvent présenter une longueur comprise entre environ 10 cm et environ 200 cm.

Selon un aspect de l'invention, lesdits canaux sont tous de mêmes dimensions

Conformément à un mode de réalisation de l'invention, ladite mousse est constituée d'un polyuréthanne ou d'un polyuréthane recouvert de PVC.

Conformément à un autre mode de réalisation de l'invention, ladite mousse réticulée est constituée d'un carbone vitreux, ladite mousse peut aussi être constituée d'un métal tel que l'aluminium, le nickel ou le plomb.

Ladite mousse peut être également constituée d'un matériau céramique.

Alternativement, lesdits canaux sont réalisés par assemblage de feuilles de mousse qui forment des canaux de section carrée ou rectangulaire.

En d'autres termes, la présente invention concerne un appareil destiné à séparer des particules contenues dans un effluent gazeux, comprenant une enveloppe ayant une entrée et une sortie, au moins un canal droit, complètement libre, non obturé, ouvert à ses deux extrémités et destiné à laisser passer ledit effluent gazeux en état turbulent de l'entrée vers la sortie caractérisé en ce qu'un matériau en mousse réticulée définit les parois desdits canaux et remplit tout l'espace entre lesdits canaux, en ce que ledit matériau en mousse comprend des fils adjacents formant des pores ou cellules interconnectées qui communiquent librement avec lesdits canaux afin de créer des zones stagnantes non turbulentes qui s'étendent à partir desdits canaux de manière à ce que les particules soient capturées et déposées sur les fils formant lesdits pores ou cellules.

Selon l'invention, les fils adjacents sont espacés les uns des autres d'une distance d'environ 0,5 mm à environ 5 mm dans chaque direction de l'espace, les fils périphériques et les espaces entre lesdits fils définissant les parois desdits canaux.

De façon particulière, lesdits canaux sont orientés horizontalement et l'appareil permet d'éliminer des gouttelettes de liquide telles que des gouttelettes contenues dans un brouillard d'huile ou d'eau, le liquide formé après déposition des gouttelettes étant drainé par ladite mousse et étant continuellement déchargé de l'enveloppe dans des moyens appropriés disposés au bas de ladite enveloppe.

Lesdits canaux peuvent être orientés horizontalement ou verticalement et les particules sont séparées de l'effluent gazeux.

L'appareil peut comprendre en outre un moyen pour secouer la mousse afin de faire tomber les particules retenues à l'intérieur de ladite mousse.

L'invention vise par ailleurs un procédé pour séparer des particules d'un effluent gazeux les contenant, comprenant les étapes suivantes :
- faire passer ledit effluent gazeux en état turbulent à travers au moins un canal droit, complètement libre, non obturé, ouvert à ses deux extrémités, dans une direction donnée dans une enveloppe,
- disposer une mousse réticulée qui entoure lesdits canaux et qui comprend une pluralité de régions non turbulentes mutuellement espacées, transversalement à la direction de l'écoulement de l'effluent gazeux, lesdites régions communiquant librement avec lesdits canaux,
- à transporter les particules par les courants gazeux de l'effluent gazeux à l'intérieur desdites régions,
- à piéger et à déposer mécaniquement lesdites particules sur les surfaces des régions non turbulentes.

De façon plus détaillée, lesdites régions non turbulentes sont constituées par des cellules formées par des fils adjacents et en ce que les particules sont déposées sur les surfaces des fils par impact inertiel et par des mécanismes de diffusion Brownienne.

L'invention vise essentiellement les particules présentant un diamètre compris entre environ 0,01 µm et environ 100 µm et un effluent gazeux présentant une vitesse dans les canaux comprise entre environ 3 et environ 20 m/s.

Selon une particularité de l'invention, lesdits canaux sont réalisés par perforation ou par forage de trous à travers des feuilles ou des blocs d'un matériau en mousse.

En outre, l'on secoue ou l'on fait vibrer périodiquement ladite enveloppe de façon à faire tomber les particules déposées sur lesdits fils de la mousse dans des moyens appropriés disposés au-dessous de la mousse.

D'autres avantages, caractéristiques et améliorations selon l'invention apparaîtront mieux à la lecture de la description qui va suivre, faite à titre illustratif et nullement limitatif en référence aux figures annexées selon lesquelles :
- La figure 1 est une perspective d'une partie d'un séparateur selon l'invention;
- La figure 2 est une coupe longitudinale schématique d'un mode de réalisation de l'invention; et
- La figure 3 est une perspective simplifiée d'un autre mode de réalisation de l'invention.

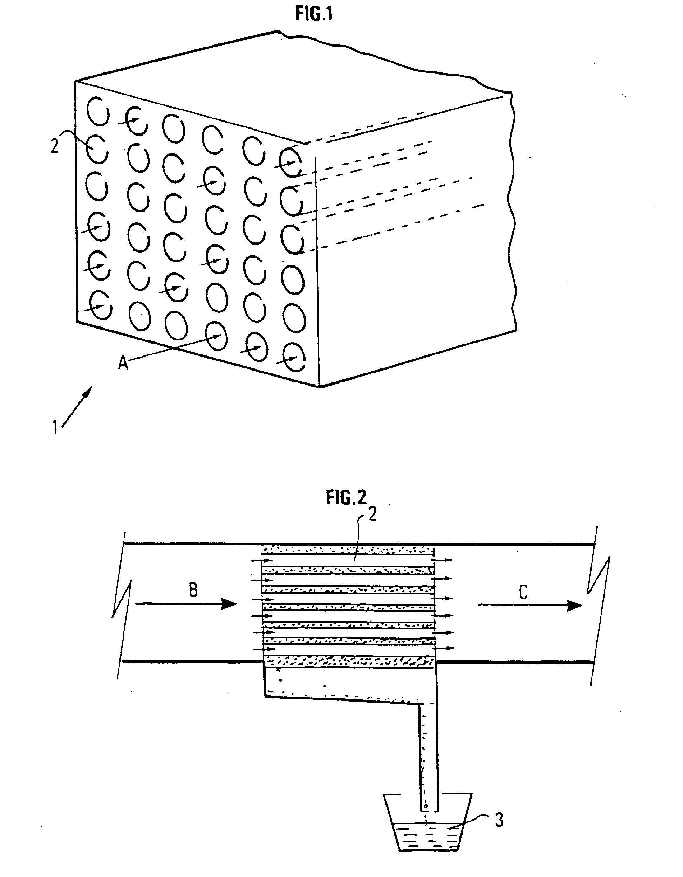

La figure 1 montre un bloc réalisé en un matériau spongieux 1 selon l'invention. Le matériau peut avantageusement être une mousse réticulée de polyuréthanne, ou de polyuréthane recouvert de PVC, une mousse réticulée de carbone vitreux ou encore une mousse réticulée d'un métal tel que l'aluminium, le nickel ou le plomb. Une mousse réticulée d'un matériau céramique peut aussi être utilisée sans sortir du cadre de l'invention.

Les matériaux visés par l'invention sont constitués de petites cellules par exemple dodécaédriques formés de fils, filaments ou ligaments fins entremêlés. La porosité est couramment comprise entre 90 et 98 %. La taille des cellules varie entre environ 0,5 mm et environ 5 mm et le diamètre des fils est compris entre 50 µm et 1000 µm. Un diamètre de fils compris entre 50 et 100 µm peut parfois être préféré.

Par ailleurs, des canaux 2, préférentiellement parallèles entre eux, sont percés ou forés dans le matériau spongieux 1. Ces canaux permettent l'écoulement du fluide selon les flèches A de la figure 1. Les canaux 2 présentent ici un diamètre compris entre 3 et 100 mm. La distance entre deux canaux peut être comprise entre environ 2 mm jusqu'à environ 20 mm.

La section transversale occupée par les canaux d'écoulement 2 représente entre 30 et 70 % de la section transversale totale de ladite mousse.

La section des canaux est préférentiellement circulaire, comme illustré sur la figure 1. Cependant les sections des canaux peuvent présenter une autre forme sans sortir du cadre de l'invention.

La disposition générale des canaux peut être telle qu'un réseau quadrillé de canaux parallèles est formé. Cependant un réseau de canaux ordonnés différemment peut être envisagé sans sortir du cadre de l'invention.

A titre illustratif, un essai a été effectué sur la base d'un bloc en mousse réticulée de polyuréthanne, percé de 63 canaux de circulation ayant chacun un diamètre d'environ 6 mm et une longueur de 18 cm ; la distance centre à centre des canaux est de 12 mm ; le taux de captation de particules d'environ 1,5 µm de diamètre est alors de 95 %. Le débit des effluents est d'environ 30 m³/h et la perte de pression dans le dispositif est de l'ordre de 0,75 kPa. Cette perte de pression peut être plus faible encore en augmentant la longueur des canaux et leur diamètre d'un même facteur, tout en maintenant le même taux de captation.

Un autre exemple relatif à l'invention concerne la séparation d'un brouillard d'eau ayant des particules d'environ 30 µm de diamètre, dans un courant d'air. Une mousse réticulée de polyuréthanne dont la taille des cellules est d'environ 0,5 mm est utilisée. Cette mousse est percée de 162 canaux horizontaux circulaires d'environ 1 cm de diamètre (distance centre à centre de 1 cm), 34 cm de long. La vitesse de l'air dans les canaux est d'environ 7 m/s avec une chute de pression d'environ 0,3 Kpa. Un taux de captation d'environ 99, 98 % a ainsi été obtenu.

Dans le domaine de la séparation des gouttelettes formant un brouillard, la présente invention présente l'avantage de drainer les gouttelettes qui forment ainsi un liquide qui s'écoule par gravité à travers le matériau spongieux réticulé.

Un exemple d'application est illustré par la figure 2 qui concerne un séparateur de brouillard visqueux en coupe longitudinale.

Un mélange de gaz et de brouillard huileux arrive selon la flèche B de la figure 2 dans une enceinte qui contient le matériau spongieux.

La mélange traverse l'ensemble des canaux 2 percés à travers le matériau spongieux et ressort de l'enceinte selon la flèche C à l'autre extrémité des canaux 2. Le drainage obtenu selon l'invention permet à l'huile d'être collectée au fond de l'enceinte. Cette huile peut elle-même être évacuée et stockée dans un réservoir ou tout autre moyen spécifique tel que 3. Ainsi l'huile capturée par les fils formant le matériau spongieux s'écoule au fond du dispositif sensiblement au même débit qu'elle est absorbée.

En d'autres termes, le matériel spongieux est saturé de liquide sur une hauteur limitée, correspondant au taux d'absorption des fils du matériel spongieux, limitée par le débit d'évacuation prévu.

Une séparation relative à un brouillard huileux ayant des particules d'environ 1 µm de diamètre dans un courant d'air a été réalisée : une mousse réticulée de polyuréthanne dont la taille des cellules est d'environ 0,5 mm est utilisée. Cette mousse est percée de 162 canaux horizontaux, d'environ 1 cm de diamètre (distance centre à centre 1 cm), de 68 cm de longueur. La vitesse de l'air dans les canaux est d'environ 10 m/s. Une chute de pression de l'ordre de 1,8 kPa est mesurée et un taux de captation de 96 % est ainsi réalisé.

Vis-à-vis des séparateurs constitués de matelas fibreux ou autres, la présente invention permet de se passer de carcasse ou autre élément de maintien du matelas, puisque le matériau spongieux selon l'invention est suffisamment rigide à l'origine pour être perforé par tout moyen connu en soi. De plus une grande précision dans le forage peut être obtenue.

Le dispositif selon l'invention est adapté à la séparation de fumées d'effluents gazeux. Les dépôts se font alors sur les fils de la mousse réticulée, où ils forment une couche solide ou bitumineuse.

Les particules étant présentes dans de faibles concentrations, le nettoyage et/ou le remplacement de la mousse est très peu fréquent.

En outre, sans sortir du cadre de l'invention, la mousse réticulée selon l'invention peut être lavée lorsqu'elle est sale, puis elle est remise en place une fois propre.

Le dispositif selon l'invention est en outre adapté à la séparation de poussières industrielles. Dans ce cas, les canaux d'écoulement, seront préférentiellement orientés verticalement de sorte que la poussière déposée sur les fils peut en être dégagée en faisant vibrer le dispositif. Ainsi la poussière tombe par gravité dans les canaux dans lesquels l'écoulement est arrêté pendant le nettoyage.

Un autre exemple, concernant les fumées issues d'un catalyseur de FCC est donné : les particules ont un diamètre d'environ 6 µm. La mousse est en céramique réticulé ayant des cellules d'environ 2 mm. 88 canaux circulaires soit horizontaux soit verticaux, ayant un diamètre d'environ 1,3 cm traversent de part en part ladite mousse. La distance centre à centre des canaux est d'environ 1,3 cm. Trois portions de mousse mesurant chacune environ 23 cm, sont disposées en série (longueur totale environ 70 cm). La vitesse de l'air dans les canaux est d'environ 7 m/s et une chute de pression d'environ 0,25 kPa a été mesurée. Un taux de captation d'environ 94 % a ainsi pu être obtenu selon cet exemple.

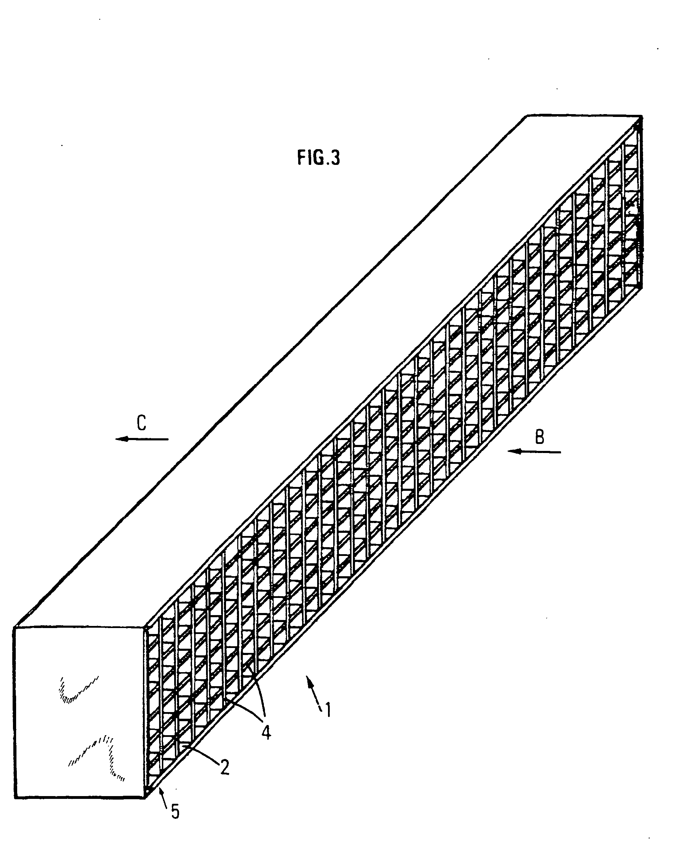

Sans sortir du cadre de l'invention, un dispositif tel que présenté schématiquement sur la figure 3 peut être prévu.

Le séparateur est ici constitué d'un assemblage de feuilles ou plaques 4 de mousse réticulée qui forment un quadrillage à travers lequel passent les effluents à traiter. Les plaques sont contenues dans une enveloppe 5.

Comme dans les précédents mode de réalisation de l'invention, les effluents à traiter arrivent selon la flèche B, traversent les canaux 2 de part en part puis ressortent selon la flèche C.

Selon un exemple d'application, les carrés du quadrillage ont un coté égal à 1,25 cm ; l'épaisseur des plaques de mousse est de l'ordre de 3 mm ; la mousse est une mousse de Nickel ayant 30 et 40 cellules (ou pores) par inch (1 inch = 2.54 cm). La taille des cellules est de l'ordre de 0,75 mm avec des fils d'environ 50 µm de diamètre.

Le quadrillage peut aussi être constitué de rectangles ou autres formes géométriques obtenues à partir d'un enchevêtrement de plaques 4 en mousse réticulée.

La longueur des canaux est selon cet exemple de 18 cm ; la hauteur du séparateur est de 11,5 cm et sa longueur (vue de face) de 49,5 cm. La figure 3 illustre globalement cette géométrie.

## Revendications

1. Séparateur de type spongieux destiné à traiter des effluents gazeux contenant des particules liquides ou solides de taille sensiblement inférieure à un micromètre ou de l'ordre d'un micromètre, **caractérisé en ce qu'**il est formé d'une mousse réticulée délimitant des canaux (2) destinés à l'écoulement en état turbulent des effluents gazeux, lesdits canaux étant agencés de telle manière et étant tels que les effluents gazeux traversent ladite mousse d'une extrémité à l'autre des canaux, et **en ce que** la mousse comprend des fils adjacents formant des pores ou cellules interconnectées qui communiquent librement avec lesdits canaux (2) afin de créer des zones stagnantes non turbulentes qui s'étendent à partir desdits canaux (2) de manière à ce que les particules de manière à ce que les particules soient capturées et déposées sur les fils formant lesdits pores ou cellules.

2. Séparateur selon la revendication 1, **caractérisé en ce que** la porosité de ladite mousse est comprise entre 90 % et 98 %, de préférence autour de 97 %.

3. Séparateur selon l'une quelconque des revendications 1 ou 2, **caractérisé en ce que** la taille des cellules formant ladite mousse est comprise entre environ 0,5 mm et environ 5 mm.

4. Séparateur selon l'une quelconque des revendications précédentes, **caractérisé en ce que** le diamètre des fils formant ladite mousse est compris entre 50 µm et 1000 µm.

5. Séparateur selon l'une quelconque des revendications précédentes, **caractérisé en ce que** le diamètre des canaux (2) transperçant ladite mousse est compris entre 3 et 100 mm.

6. Séparateur selon l'une quelconque des revendications précédentes, **caractérisé en ce que** les canaux (2) présentent une longueur comprise entre environ 10 cm et environ 200 cm.

7. Séparateur selon l'une des revendications précédentes, **caractérisé en ce que** lesdits canaux sont tous de mêmes dimensions.

8. Séparateur selon l'une quelconque des revendications précédentes, **caractérisé en ce que** ladite mousse est constituée d'un polyuréthane.

9. Séparateur selon l'une des revendications précédentes, **caractérisé en ce que** ladite mousse est constituée d'un polyuréthane recouvert de PVC.

10. Séparateur selon l'une quelconque des revendications 1 à 7, **caractérisé en ce que** ladite mousse est constituée d'un carbone vitreux.

11. Séparateur selon l'une quelconque des revendications 1 à 7, **caractérisé en ce que** ladite mousse est constituée d'un métal, tel que l'aluminium, le nickel ou le plomb.

12. Séparateur selon l'une des revendications 1 à 7, **caractérisé en ce que** ladite mousse est constituée d'un matériau céramique.

13. Séparateur selon l'une quelconque des revendications précédentes, **caractérisé en ce que** lesdits canaux (2) sont réalisés par assemblage de feuilles de mousse qui forment des canaux de section carrée ou rectangulaire.

14. Appareil destiné à séparer des particules contenues dans un effluent gazeux, comprenant une enveloppe (5 ; 10) ayant une entrée et une sortie, au moins un canal (2) droit, complètement libre, non obturé, ouvert à ses deux extrémités et destiné à laisser passer ledit effluent gazeux en état turbulent de l'entrée vers la sortie, **caractérisé en ce qu'**un matériau en mousse réticulée définit les parois desdits canaux (2) et remplit tout l'espace entre lesdits canaux, **en ce que** ledit matériau en mousse comprend des fils adjacents formant des pores ou cellules interconnectées qui communiquent librement avec lesdits canaux (2) afin de créer des zones stagnantes non turbulentes qui s'étendent à partir desdits canaux (2) de manière à ce que les particules soient capturées et déposées sur les fils formant lesdits pores ou cellules.

15. Appareil selon la revendication 14, **caractérisé en ce que** les fils adjacents sont espacés les uns des autres d'une distance d'environ 0,5 mm à environ 5 mm dans chaque direction de l'espace, les fils périphériques et les espaces entre lesdits fils définissant les parois desdits canaux (2)

16. Appareil selon l'une quelconque des revendications 14 ou 15, **caractérisé en ce que** lesdits canaux (2) sont orientés horizontalement, **en ce qu'**il permet d'éliminer des gouttelettes de liquide telles que des gouttelettes contenues dans un brouillard d'huile ou d'eau et **en ce que** le liquide formé après déposition des gouttelettes est drainé par ladite mousse et est continuellement déchargé de l'enveloppe (5 ; 10) dans des moyens appropriés (3) disposés au bas de ladite enveloppe.

17. Appareil selon l'une quelconque des revendications 14 à 16, **caractérisé en ce que** lesdits canaux (2) sont orientés horizontalement ou verticalement et **en ce que** lesdites particules sont séparées de l'effluent gazeux.

18. Appareil selon l'une quelconque des revendications 14 à 17, **caractérisé en ce qu'**il comprend en outre un moyen pour secouer la mousse afin de faire tomber les particules retenues à l'intérieur de ladite mousse.

19. Procédé pour séparer des particules d'un effluent gazeux les contenant, comprenant les étapes suivantes :
- faire passer ledit effluent gazeux en état turbulent à travers au moins un canal (2) droit, complètement libre, non obturé, ouvert à ses deux extrémités, dans une direction donnée dans une enveloppe (5 ; 10),
- disposer une mousse réticulée qui entoure lesdits canaux (2) et qui comprend une pluralité de régions non turbulentes mutuellement espacées, transversalement à la direction de l'écoulement de l'effluent gazeux, lesdites régions communiquant librement avec lesdits canaux (2),
- à transporter les particules par les courants gazeux de l'effluent gazeux à l'intérieur desdites régions,
- à piéger et à déposer mécaniquement lesdites particules sur les surfaces des régions non turbulentes.

20. Procédé selon la revendication 19, **caractérisé en ce que** lesdites régions non turbulentes sont constituées par des cellules formées par des fils adjacents et **en ce que** les particules sont déposées sur les surfaces des fils par impact inertiel et par des mécanismes de diffusion Brownienne.

21. Procédé selon l'une quelconque des revendications 19 ou 20, **caractérisé en ce que** lesdites particules présentent un diamètre compris entre environ 0,01 µm et environ 100 µm et **en ce que** l'effluent gazeux présente une vitesse dans les canaux (2) comprise entre environ 3 et environ 20 m/s.

22. Procédé selon l'une quelconque des revendications 19 à 21, **caractérisé en ce que** lesdits canaux (2) sont réalisés par perforation ou par forage de trous à travers des feuilles ou des blocs d'un matériau en mousse.

23. Procédé selon l'une quelconque des revendications 19 à 22, **caractérisé en ce que** l'on secoue ou l'on fait vibrer périodiquement ladite enveloppe (5 ; 10) de façon à faire tomber les particules déposées sur lesdits fils de la mousse dans des moyens appropriés (3) disposés au-dessous de la mousse.

## Claims

1. A porous-type separator intended for processing off-gases containing liquid or solid particles substantially smaller than one micrometer or in the order of one micrometer, **characterised in that** it is formed by a reticulated foam which delimits channels (2) intended for turbulent-state flowing of the off-gases, said channels being arranged in such a manner and being such that the off-gases flow through said foam from one end of the channels to the other, and **in that** the foam includes adjacent threads which form interconnected pores or cells which freely communicate with said channels (2) in order to create stagnant non-turbulent zones which extend from said channels (2) in a manner such that the particles are trapped and deposited on the threads which form said pores or cells.

2. The separator according to claim 1, **characterised in that** the porosity of said foam is between 90% and 98%, preferably about 97%.

3. The separator according to any one of claims 1 or 2, **characterised in that** the size of the cells forming said foam is between approximately 0.5 mm and approximately 5 mm.

4. The separator according to any one of the preceding claims, **characterised in that** the diameter of the threads forming said foam is between 50 µm and 1000 µm.

5. The separator according to any one of the preceding claims, **characterised in that** the diameter of the channels (2) running through said foam is between 3 and 100 mm.

6. The separator according to any one of the preceding claims, **characterised in that** a length of the channels (2) is between approximately 10 cm and approximately 200 cm.

7. The separator according to one of the preceding claims, **characterised in that** said channels all have the same dimensions.

8. The separator according to any one of the preceding claims, **characterised in that** said foam is constituted of a polyurethane.

9. The separator according to one of the preceding claims, **characterised in that** said foam is constituted of a PVC-coated polyurethane.

10. The separator according to any one of claims 1 to 7, **characterised in that** said foam is constituted of a vitreous carbon.

11. The separator according to any one of claims 1 to 7, **characterised in that** said foam is constituted of a metal, such as aluminum, nickel or lead.

12. The separator according to one of claims 1 to 7, **characterised in that** said foam is constituted of a ceramic material.

13. The separator according to any one of the preceding claims,
**characterised in that** said channels (2) are made by assembly of foam sheets which form channels of square or rectangular section.

14. A device intended to separate particles contained in an off-gas, including a casing (5; 10) with an inlet and an outlet, at least one straight, totally free, unsealed, channel (2) open at both ends and intended to allow passage of said turbulent-state off-gas from the inlet to the outlet, **characterised in that** a reticulated foam material defines the walls of said channels (2) and fills all of the space between the said channels, **in that** said foam material includes adjacent threads which form interconnected pores or cells which freely communicate with said channels (2) in order to create stagnant non-turbulent zones which extend from said channels (2) in a manner such that the particles are trapped and deposited on the threads which form said pores or cells.

15. The device according to claim 14, **characterised in that** the adjacent threads are spaced apart by a distance of about 0.5 mm to about 5 mm in each direction of the space, the peripheral threads and the spaces between said threads defining the walls of said channels (2).

16. The device according to any one of claims 14 to 15, **characterised in that** said channels (2) are orientated horizontally, **in that** it makes it possible to eliminate droplets of liquid such as the droplets contained in an oil or water mist and **in that** the liquid formed after deposition of the droplets is drained by means of the said foam and is continually discharged from the casing (5; 10) into appropriate means (3) placed at the bottom of said casing.

17. The device according to any one of claims 14 to 16, **characterised in that** said channels (2) are orientated horizontally or vertically and **in that** said particles are separated from the off-gas.

18. The device according to any one of claims 14 to 17, **characterised in that** it further includes a means for shaking the foam so as to cause the particles kept inside said foam to fall.

19. A process for separating particles from an off-gas containing them, including the following steps:
- making the said turbulent-state off-gas pass through at least one straight, totally free, unsealed, channel (2) open at both ends, in a given direction in a casing (5; 10),
- placing a reticulated foam which surrounds the said channels (2) and which include a plurality of non-turbulent regions which are mutually spaced apart, transverse to the direction of flow of the off-gas, the said regions communicating freely with the said channels (2),
- transporting the particles via the gaseous currents of the off-gas inside the said regions,
- mechanically removing and depositing said particles on the surfaces of the non-turbulent regions.

20. The process according to claim 19, **characterised in that** said non-turbulent regions are constituted by cells formed by adjacent threads and **in that** the particles are deposited on the thread surfaces by inertial impact and by Brownian diffusion mechanisms.

21. The process according to any one of claims 19 or 20, **characterised in that** said particles have a diameter of between approximately 0.01 µm and approximately 100 µm, and **in that** the velocity of the off-gas in the channels (2) is between approximately 3 and approximately 20 m/s.

22. The process according to any one of claims 19 to 21, **characterised in that** said channels (2) are made by perforating or by drilling holes through sheets or blocks of a foam material.

23. The process according to any one of claims 19 to 22, **characterised in that** said casing (5; 10) is periodically shaken or vibrated so as to cause the particles deposited on said threads to fall from the foam into appropriate means (3) placed below the foam.

## Patentansprüche

1. Abscheider vom Typ Schwammabscheider, der dazu bestimmt ist, gasförmige Abströme, die flüssige oder feste Partikel von einer Größe von im Wesentlichen unter einem Mikrometer oder ungefähr einem Mikrometer enthalten, zu behandeln, **dadurch gekennzeichnet, dass** er von einem vernetzten Schaum gebildet ist, der Kanäle (2) begrenzt, die für das turbulente Abfließen der gasförmigen Abströme bestimmt sind, wobei die Kanäle derart angeordnet und vorgesehen sind, dass die gasförmigen Abströme durch den Schaum von einem Ende der Kanäle zum anderen strömen, und dass der Schaum aneinander grenzende Fäden umfasst, die miteinander verbundene Poren oder Zellen bilden, die frei mit den Kanälen (2) in Verbindung stehen, um nicht-turbulente Ruhezonen zu erzeugen, die sich von den Kanälen (2) derart erstrecken, dass die Partikel eingefangen und auf den die Poren oder Zellen bildenden Fäden abgelegt werden.

2. Abscheider nach Anspruch 1, **dadurch gekennzeichnet, dass** die Porosität des Schaums zwischen 90 % und 98 %, vorzugsweise um 97 %, beträgt.

3. Abscheider nach einem der Ansprüche 1 oder 2, **dadurch gekennzeichnet, dass** die Größe der Zellen, die den Schaum bilden, zwischen ungefähr 0,5 mm und ungefähr 5 mm beträgt.

4. Abscheider nach einem der vorhergehenden Ansprüche, **dadurch gekennzeichnet, dass** der Durchmesser der Fäden, die den Schaum bilden, zwischen 50 µm und 1000 µm beträgt.

5. Abscheider nach einem der vorhergehenden Ansprüche, **dadurch gekennzeichnet, dass** der Durchmesser der Kanäle (2), die durch den Schaum hindurchgehen, zwischen 3 und 100 mm beträgt.

6. Abscheider nach einem der vorhergehenden Ansprüche, **dadurch gekennzeichnet, dass** die Kanäle (2) eine Länge zwischen ungefähr 10 cm und ungefähr 200 cm aufweisen.

7. Abscheider nach einem der vorhergehenden Ansprüche, **dadurch gekennzeichnet, dass** die Kanäle alle dieselben Abmessungen haben.

8. Abscheider nach einem der vorhergehenden Ansprüche, **dadurch gekennzeichnet, dass** der Schaum von einem Polyurethan gebildet ist.

9. Abscheider nach einem der vorhergehenden Ansprüche, **dadurch gekennzeichnet, dass** der Schaum von einem mit PVC überzogenen Polyurethan gebildet ist.

10. Abscheider nach einem der Ansprüche 1 bis 7, **dadurch gekennzeichnet, dass** der Schaum von einem glasartigen Kohlenstoff gebildet ist.

11. Abscheider nach einem der Ansprüche 1 bis 7, **dadurch gekennzeichnet, dass** der Schaum von einem Metall, wie beispielsweise Aluminium, Nickel oder Blei, gebildet ist.

12. Abscheider nach einem der Ansprüche 1 bis 7, **dadurch gekennzeichnet, dass** der Schaum von einem keramischen Material gebildet ist.

13. Abscheider nach einem der vorhergehenden Ansprüche, **dadurch gekennzeichnet, dass** die Kanäle (2) durch Zusammenfügen von Schaumschichten gebildet sind, die Kanäle von quadratischem oder rechteckigem Querschnitt bilden.

14. Gerät, das dazu bestimmt ist, Partikel, die in einem gasförmigen Abstrom enthalten sind, abzuscheiden, umfassend eine Hülle (5; 10) mit einem Eingang und einem Ausgang, mindestens einen geraden Kanal (2), der völlig frei, nicht verstopft an seinen beiden Enden offen und dazu bestimmt ist, den gasförmigen Abstrom im turbulenten Zustand vom Eingang zum Ausgang durchzulassen, **dadurch gekennzeichnet, dass** ein Material aus vernetztem Schaum die Wände der Kanäle (2) definiert und den gesamten Raum zwischen den Kanälen ausfüllt, dass das Schaummaterial aneinander grenzende Fäden umfasst, die miteinander verbundene Poren oder Zellen bilden, die frei mit den Kanälen (2) in Verbindung stehen, um nicht-turbulente Ruhezonen zu erzeugen, die sich von den Kanälen (2) derart erstrecken, dass die Partikel eingefangen und auf den Fäden, die die Poren oder Zellen bilden, abgelegt werden.

15. Gerät nach Anspruch 14, **dadurch gekennzeichnet, dass** die aneinander grenzenden Fäden voneinander um einen Abstand von ungefähr 0,5 mm bis ungefähr 5 mm in jede Richtung des Raums entfernt sind, wobei die Fäden an der Peripherie und die Räume zwischen den Fäden die Wände der Kanäle (2) definieren.

16. Gerät nach einem der Ansprüche 14 oder 15, **dadurch gekennzeichnet, dass** die Kanäle (2) horizontal ausgerichtet sind, dass es eine Beseitigung der Flüssigkeitströpfchen, wie beispielsweise der Tröpfchen, die in einem Öl- oder Wassernebel enthalten sind, ermöglicht, und dass die nach Ablage der Tröpfchen gebildete Flüssigkeit durch den Schaum abgeleitet und kontinuierlich aus der Hülle (5; 10) in geeignete Mittel (3) geleitet wird, die unten an der Hülle angeordnet sind.

17. Gerät nach einem der Ansprüche 14 bis 16, **dadurch gekennzeichnet, dass** die Kanäle (2) horizontal oder vertikal ausgerichtet sind, und dass die Partikel aus dem gasförmigen Abfluss abgeschieden werden.

18. Gerät nach einem der Ansprüche 14 bis 17, **dadurch gekennzeichnet, dass** es ferner ein Mittel umfasst, um den Schaum zu rütteln, um die im Inneren des Schaums zurückgehaltenen Partikel herausfallen zu lassen.

19. Verfahren zum Abscheiden der Partikel aus einem gasförmigen Abstrom, der diese enthält, umfassend die folgenden Schritte:
- Leiten des gasförmigen Abstroms im turbulenten Zustand durch mindestens einen geraden Kanal (2), der vollkommen frei, nicht verstopft und an seinen beiden Enden in eine gegebene Richtung in einer Hülle (5; 10) offen ist,
- Anbringen eines vernetzten Schaums, der die Kanäle (2) umgibt und der eine Vielzahl von nicht-turbulenten voneinander beabstandeten Bereichen quer zur Abfließrichtung des gasförmigen Abstroms umfasst, wobei die Bereiche frei mit den Kanälen (2) in Verbindung stehen,
- Befördern der Partikel durch die Gasströme des gasförmigen Abstroms in das Innere der Bereiche,
- Einschließen und mechanisches Ablegen der Partikel auf die Oberflächen der nicht-turbulenten Bereiche.

20. Verfahren nach Anspruch 19, **dadurch gekennzeichnet, dass** die nicht wirbelnden Bereiche von Zellen gebildet sind, die von aneinander grenzenden Fäden gebildet sind, und dass die Partikel auf die Oberflächen der Fäden durch Trägheitsstoß und Brown'sche Diffusionsmechanismen aufgebracht werden.

21. Verfahren nach einem der Ansprüche 19 oder 20, **dadurch gekennzeichnet, dass** die Partikel einen Durchmesser zwischen ungefähr 0,01 µm und ungefähr 100 µm aufweisen, und dass der gasförmige Abstrom eine Geschwindigkeit in den Kanälen (2) zwischen ungefähr 3 und ungefähr 20 m/s aufweist.

22. Verfahren nach einem der Ansprüche 19 bis 21, **dadurch gekennzeichnet, dass** die Kanäle (2) durch Perforation oder Bohren von Löchern durch Schichten oder Blöcke eines Schaummaterials hergestellt werden.

23. Verfahren nach einem der Ansprüche 19 bis 22, **dadurch gekennzeichnet, dass** die Hülle (5; 10) regelmäßig gerüttelt und zum Vibrieren gebracht wird, um die auf den Fäden des Schaums abgelegten Partikel in geeignete Mittel (3) fallen zu lassen, die unter dem Schaum angeordnet sind.
